(19) Europäisches Patentamt
European Patent Office
Office européen des brevets

(11) **EP 4 692 785 A1**

(12) **EUROPEAN PATENT APPLICATION**
published in accordance with Art. 153(4) EPC

(43) Date of publication:
**11.02.2026 Bulletin 2026/07**

(21) Application number: 24779360.7

(22) Date of filing: **11.03.2024**

(51) International Patent Classification (IPC):
*G01N 30/88* (2006.01)   *G01N 30/06* (2006.01)

(52) Cooperative Patent Classification (CPC):
**G01N 30/06; G01N 30/88**

(86) International application number:
**PCT/JP2024/009348**

(87) International publication number:
**WO 2024/203230 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.03.2023 JP 2023052445**

(71) Applicant: **Tosoh Corporation
Yamaguchi 746-8501 (JP)**

(72) Inventor: **OHNISHI, Tatsuya
Shunan-shi, Yamaguchi 746-8501 (JP)**

(74) Representative: **Novagraaf International SA
Chemin de l'Echo 3
1213 Onex, Geneva (CH)**

(54) **PREPARATION LIQUID FOR ANALYZING HEMOGLOBIN COMPONENT, AND METHOD FOR MEASURING HEMOGLOBIN COMPONENT**

(57) Provided is a preparation liquid for analyzing hemoglobins, which preparation liquid does not produce a degradation product containing alkylphenol, and achieves a hemolytic performance equivalent to that of polyoxyethylene octylphenyl ether and highly accurate measurement of hemoglobins. Also provided is a method of measuring hemoglobins using the preparation liquid for analyzing hemoglobins. The present invention relates to a preparation liquid to be used for quantitatively analyzing hemoglobins by liquid chromatography, including a nonionic surfactant which does not produce alkylphenol as a degradation product, which includes one or more cyclic skeletons in the molecule, which includes a polyoxyethylene group, and which has an HLB value within the range of 6.5 to 15.5.

## Fig. 1

**Description**

FIELD

The present invention relates to a preparation liquid for analyzing hemoglobins, which preparation liquid is used in the measurement of hemoglobins by liquid chromatography and comprises a surfactant, and to a method of measuring hemoglobins using the preparation liquid for analyzing hemoglobins.

BACKGROUND

Hemoglobin is a protein which is contained in red blood cells, and which has a function to transport oxygen molecules in the body. Hemoglobin has an absorption wavelength within the Soret band due to the presence of heme, which is a prosthetic group. One method of analyzing hemoglobins utilizing this property is liquid chromatography.

Analysis of hemoglobins using liquid chromatography possesses highly accurate measurement values, and is useful as a diagnostic method for diabetes, hemoglobinopathy, thalassemia, and the like. Therefore, this analysis has been widely used.

Hemoglobin is a heterotetramer composed of four subunits, and there are four globin chains $\alpha$, $\beta$, y, and $\delta$ as its polypeptide subunits in healthy individuals. Among these, a combination of two $\alpha$-globin chains and two non-$\alpha$-globin chains forms hemoglobin. There are basically three types of hemoglobin: hemoglobin $A_0 = \alpha_2\beta_2$, hemoglobin $F = \alpha_2\gamma_2$, and hemoglobin $A_2 = \alpha_2\delta_2$. In general adults, hemoglobin $A_0$ accounts for the major part of total hemoglobin.

When there is an imbalance in the ratio between the $\alpha$ chains and the non-$\alpha$ chains biosynthesized in the body, the production of hemoglobin occurs in a manner dependent on the amount of the polypeptide chains whose production is insufficient, resulting in development of anemia. Deficiency of the synthesis of $\alpha$-chains results in development of $\alpha$-thalassemia, and deficiency of the synthesis of $\beta$-chains results in $\beta$-thalassemia. In thalassemia, the proportion of heteromers containing other globin chains may increase so as to compensate for the quantitative insufficiency of the chains whose synthesis is deficient. For example, in $\beta$-thalassemia, the production of $\beta$-globin chains is lower than that of normal individuals, while the production of $\gamma$-globin chains and $\delta$-globin chains is not deficient, so that the relative abundances of $\gamma$- globin chains and $\delta$-globin chains increase, resulting in increases in the concentrations of hemoglobin F and hemoglobin $A_2$ in blood. These hemoglobin concentrations are used as one of the diagnostic criteria for $\beta$-thalassemia.

Hemoglobinopathy, caused by mutation of globin genes, is a genetic disease that affects the structures or the normal production of hemoglobin molecules, leading to a variety of abnormal (variant) hemoglobins having unusual amino acid sequences. The abnormal hemoglobins most commonly found worldwide include hemoglobin E, hemoglobin D, hemoglobin S, and hemoglobin C. All of these abnormal hemoglobins have substitution of one amino acid residue that has occurred in the beta globin chain. Substitution, insertion, or deletion of an amino acid residue, and a conformational change associated therewith, lead to a small change in the surface charge of hemoglobin, and such a change enables detection and separation of the abnormal hemoglobins by liquid chromatography based on electrostatic interactions.

Hemoglobin is known to bind to various sugars and sugar derivatives in blood. In particular, among these, glycated hemoglobin in which glucose is bound to the valine located at the N-terminus of the $\beta$-globin chain, is called hemoglobin A1c (HbA1c). Since the reaction between the amino group of the N-terminal valine and the glucose proceeds nonenzymatically, HbA1c and the glucose concentration in blood have a positive correlation, so that HbA1c has been widely used in the diagnosis of diabetes as an index that reflects the average blood glucose level during the past one or two months.

Examples of a method of measuring the ratio of glycated hemoglobin contained in the total hemoglobin in blood, that is, HbA1c%, include liquid chromatography, immunoassay, and the enzymatic method. Among these, liquid chromatography has been employed in many laboratories since it has the advantages that good measurement accuracy and high reproducibility can be achieved therewith, and that sample preparation is not required.

In common analysis of hemoglobins using liquid chromatography, a sample containing hemoglobin is subjected to hemolysis and dilution using a preparation liquid for analyzing hemoglobins, which preparation liquid contains a surfactant. Conventionally, for reagents containing hemoglobin, and for preparation liquids used for dissolving blood samples, polyoxyethylene octylphenyl ether (trade name: Triton X-100 (trademark)), which is a relatively mild surfactant capable of solubilizing protein while avoiding the denaturation, has been widely used. However, it has been pointed out that the above substance, when discharged into rivers and oceans, is degraded into octylphenol, which is classified as an endocrine disruptor. Further, the substance has been included in the list of candidate substances to be controlled by the approval under the REACH regulation, which is one of the European regulations for chemical substance control.

For the above reasons, surfactants that do not produce alkylphenols including octylphenol as degradation products have been demanded. For example, PTL 1 to 4 disclose a number of preparation liquids for analyzing hemoglobins, the preparation liquids comprising surfactants other than polyoxyethylene octylphenyl ether.

However, for example, PTL 1 to 3 do not describe any case using a nonionic surfactant which comprises both a cyclic structure and a polyoxyethylene group in the molecule, and which achieves excellent solubility of hemoglobin-containing samples.

The degradation product mentioned herein refers to a series of substances resulting from cleavage of covalent bonds in the surfactant molecule. The cleavage of the covalent bonds occurs by the actions of microorganisms, enzymes, acids/bases, heat, light, radiation, and the like. For example, NPL 1 reports that biodegradation of Triton X-100 for 10 to 15 days using active sludge containing microorganisms results in degradation of the Triton X-100 into octylphenol, and polyoxyethylene octylphenyl ethers with different degrees of polymerization.

Conventionally, in the measurement of hemoglobins by liquid chromatography, lysed blood containing polyoxyethylene octylphenyl ether as a surfactant has been commonly employed. However, from the viewpoint of the concern that this surfactant may adversely affect the biological environment as described above, and also from the viewpoint of the regulation, a surfactant that replaces polyoxyethylene octylphenyl ether has been demanded.

[CITATION LIST]

[PATENT LITERATURE]

[PTL 1] Japanese Unexamined Patent Publication (Kokai) No. 2020-046435
[PTL 2] Japanese Unexamined Patent Publication (Kokai) No. 2020-076788
[PTL 3] Japanese Unexamined Patent Publication (Kokai) No. 2022-092957

[NON-PATENT LITERATURE]

[NPL 1] B. Wyrwas, et al., J. Environ. Manage., 2013, 292-299

SUMMARY

[TECHNICAL PROBLEM]

An object of the present invention is to provide a surfactant that enables avoidance of the problem that alkylphenols are discharged to the environment due to polyoxyethylene octylphenyl ether, which has been widely used in the measurement of hemoglobins by liquid chromatography, and to provide a preparation liquid for analyzing hemoglobins supplemented with this surfactant.

More specifically, an object of the present invention is to provide a preparation liquid for analyzing hemoglobins, which preparation liquid does not produce any alkylphenol in the degradation product, and which preparation liquid achieves a hemolytic performance equivalent to that of polyoxyethylene octylphenyl ether and highly accurate measurement of hemoglobins, and to provide a method of measuring hemoglobins using the preparation liquid for analyzing hemoglobins.

[SOLUTION TO PROBLEM]

In order to solve the above problem, the present inventors intensively studied to discover that a nonionic surfactant comprising a cyclic skeleton in the molecule promotes rapid dissolution and hemolysis of a hemoglobin-containing sample, maintains good measurement accuracy and high reproducibility in the measurement, and enables suppression of contamination of the channel in the liquid-chromatography analyzing apparatus used for the measurement.

The present inventors discovered that, by using a solution supplemented with a surfactant comprising a cyclic skeleton in the molecule as the preparation liquid for analyzing hemoglobins, a high hemolytic performance, a washing ability for the column and the flow channel in the analyzing apparatus, and highly accurate measurement of hemoglobins can be achieved, thereby completing the present invention.

The present invention is described below in detail.

The aspects of the present invention are described in [1] to [8] below.

[1] A preparation liquid for analyzing hemoglobins by liquid chromatography, the preparation liquid comprising at least one nonionic surfactant which does not produce alkylphenol as a degradation product, which comprises one or more cyclic skeletons in the molecule, which comprises a polyoxyethylene group, and which has an HLB value within the range of 6.5 to 15.5.

[2] The preparation liquid for analyzing hemoglobins according to [1], wherein the cyclic skeleton constituting the nonionic surfactant comprises one or more selected from the group consisting of a cyclohexane skeleton, a sterane skeleton, a lactam, and a crown ether.

[3] The preparation liquid for analyzing hemoglobins according to [1], comprising, as the nonionic surfactant, one or more selected from the following substances (1) to (4):

(1) polyoxyethylene (10) isooctylcyclohexyl ether;
(2) polyoxyethylene branched nonylcyclohexyl ether;
(3) polyoxyethylene cholesteryl ether; and
(4) polyoxyethylene phytosteryl ether.

[4] The preparation liquid for analyzing hemoglobins according to [1] to [3], wherein the polyoxyethylene group constituting the nonionic surfactant has an average degree of polymerization within the range of 5 to 30.

[5] The preparation liquid for analyzing hemoglobins according to any one of [1] to [4], wherein the content of the nonionic surfactant in the preparation liquid is within the range of 0.01 to 1.00% by mass.

[6] The preparation liquid for analyzing hemoglobins according to any one of [1] to [5], having a pH within the range of 5.5 to 9.5.

[7] A method of measuring hemoglobins, the method comprising the steps of: mixing the preparation liquid for analyzing hemoglobins according to any one of [1] to [6] with a sample containing hemoglobins, to obtain a measurement sample; and subjecting the measurement sample to measurement by liquid chromatography.

[8] A measurement apparatus for analyzing hemoglobins, the apparatus having a function to dilute and mix, in the apparatus, the preparation liquid for analyzing hemoglobins according to any one of [1] to [6], and a sample containing hemoglobins.

[ADVANTAGEOUS EFFECTS OF INVENTION]

The present invention can provide a preparation liquid for analyzing hemoglobins, which preparation liquid has excellent ability to allow hemolysis and dissolution of a sample containing hemoglobins, and which preparation liquid achieves measurement accuracy and reproducibility equivalent to those of polyoxyethylene octylphenyl ether, which has been conventionally widely used in the field of quantitative measurement of hemoglobins. Furthermore, the present invention can provide a preparation liquid for analyzing hemoglobins, which preparation liquid allows avoidance of discharge of alkylphenols into the environment.

BRIEF DESCRIPTION OF DRAWINGS

FIG. 1 shows chromatograms obtained in Examples 1 and 2
FIG. 2 shows chromatograms obtained in Comparative Examples 1 and 2.
FIG. 3 shows chromatograms obtained in Examples 3 and 4.
FIG. 4 shows chromatograms obtained in Examples 5 to 9.
FIG. 5 shows chromatograms obtained in Examples 10 and 11.
FIG. 6 shows chromatograms obtained in Examples 12 to 14.
FIG. 7 shows chromatograms obtained in Examples 15 to 18.
FIG. 8 shows chromatograms obtained in Examples 19 to 24.
FIG. 9 shows chromatograms obtained in Examples 25 to 28.

DESCRIPTION OF EMBODIMENTS

Modes of the present invention are described below in detail by way of Examples, but the present invention is not limited to these Examples.

The present invention relates to a preparation liquid for analyzing hemoglobins, which preparation liquid is used for the preparation of a sample containing hemoglobins in the measurement of hemoglobins by liquid chromatography, wherein the preparation liquid comprises a surfactant, wherein the surfactant does not produce a degradation product containing alkylphenol, and wherein the surfactant comprises a cyclic skeleton in the molecule.

The degradation product of the surfactant does not comprise an alkylphenol structure represented by nonylphenol and octylphenol

The surfactant comprises a cyclic skeleton, and this partial structure may be a monocyclic structure, may be a polycyclic structure, or may be a heterocyclic structure. Examples of the cyclic skeleton include, but are not limited to, monocyclic structures such as cyclohexane and cyclopentane; polycyclic structures such as sterane, decahydronaphthalene, and tetradecahydroanthracene; and heterocyclic structures such as lactam, lactone, oxolane, and crown ether. The surfactant preferably does not have ionicity within the pH range used for the preparation liquid for analyzing hemoglobins. In addition, the above surfactant molecule may have an unsaturated bond, and the degree of unsaturation of the molecule is not limited. The molecule may have, for example, a terpene skeleton represented by β-carotene.

Examples of the surfactant include polyoxyethylene (10) isooctylcyclohexyl ether, polyoxyethylene branched nonylcyclohexyl ether, polyoxyethylene cholesteryl ether, and polyoxyethylene phytosteryl ether.

One of the scales of the hydrophilicity of a surfactant molecule is the hydrophile lipophile balance (hereafter referred to as HLB value). The HLB value is basically within the range of 0 to 20. In cases where the use for a preparation liquid for analyzing hemoglobins is to be considered, the preparation liquid preferably comprises a surfactant having an HLB value with which the cell membrane of red blood cells is disrupted to allow formation of an o/w-type emulsion.

A single surfactant may be included, or a combination of a plurality of surfactants may be included in the preparation liquid for analyzing hemoglobins. For example, (1) polyoxyethylene (10) isooctylcyclohexyl ether and (2) polyoxyethylene branched nonylcyclohexyl ether, which are substances described in aspect [3], can be used either individually or in combination since they do not deteriorate each other's hemolytic action. Further, in the cases where they are used in combination, there is no limitation of the mixing ratio.

Examples of the sample containing hemoglobins include controls, calibrators, or blood. The sample may be in the form of, for example, a liquid product or a lyophilized product.

The preparation liquid for analyzing hemoglobins of the present invention may comprise a preservative, and examples of the preservative include, but are not limited to, sodium azide, lithium azide, streptomycin, kanamycin, puromycin, and tetracycline. In addition, the preparation liquid may also comprise, as a hemoglobin-stabilizing agent, a chelating agent such as sodium salt or potassium salt of EDTA, or the like. Further, the preparation liquid may also comprise, as a pH-buffering agent, a carboxylate, a phosphate, an ammonium salt, an alkylamine, or the like.

The surfactant included in the preparation liquid for analyzing hemoglobins of the present invention is used preferably at a concentration of 0.01 to 1.00% by mass, more preferably at a concentration of 0.05 to 0.25% by mass.

The surfactant included in the preparation liquid for analyzing hemoglobins of the present invention is preferably used at an HLB value within the range of 6.5 to 15.5. The HLB value mentioned herein is a value calculated using the Griffin's method according to the following formula:

$$\text{HLB value} = 20 \times (\text{the molecular weight of the hydrophilic residue / the molecular weight}).$$

The polyoxyethylene group constituting the surfactant included in the preparation liquid for analyzing hemoglobins of the present invention preferably has an average degree of polymerization within the range of 5 to 30.

The preparation liquid for analyzing hemoglobins of the present invention is preferably used at a pH within the range of 5.5 to 9.5.

The present invention includes a method of measuring hemoglobins, the method comprising the steps of: mixing the preparation liquid for analyzing hemoglobins with a sample containing hemoglobins to cause hemolysis and dissolution of the sample, thereby obtaining a measurement sample; and subjecting the resulting measurement sample to measurement by liquid chromatography.

The mixing step described above may be carried out by the hemoglobin measurement apparatus, or may be carried out by the measurer in advance.

The method of measuring hemoglobins may be performed, for example, by the following operation.

1. A reagent for measuring hemoglobins is mixed with a sample containing hemoglobins.
2. The solution obtained in 1. is subjected to measurement using cation exchange chromatography.
3. The ratio of the peak to be measured is calculated using the following Formula A:
abundance ratio (%) of target component = (peak area of measurement component/sum of peak areas of all components).

The measurement of hemoglobins by liquid chromatography can be more simply carried out by using an automatic analyzing apparatus capable of fully automatically performing the process from the step of diluting the sample containing hemoglobins to the step of calculating the peak area. Examples of a commercially available analyzing apparatus include the automatic glycohemoglobin analyzer HLC-723 G11 (manufactured by Tosoh Corporation).

The above analyzing apparatus for measurement of hemoglobins comprises: means of introducing a sample containing hemoglobins into the apparatus; means of mixing the sample with a preparation liquid for analyzing hemoglobins, and homogenizing the resulting mixture; means of transferring the homogenized liquid; means of separating each component of the transferred liquid; means of detecting the separated component to obtain a chromatogram; and means of analyzing the detected chromatogram.

EXAMPLE 1

(Example 1)

Using the following preparation liquid for analyzing hemoglobins, a blood sample was subjected to measurement.

1. Preparation of Preparation Liquid for Analyzing Hemoglobins

In pure water, 0.10% by mass polyoxyethylene (10) isooctylcyclohexyl ether (manufactured by MERCK, trade name: Triton X-100 reduced) as a surfactant; 0.05% by mass sodium azide (manufactured by Fujifilm Wako Pure Chemical Corporation) as a preservative; and 0.05% by mass EDTA-4Na (manufactured by Dojindo Laboratories) and 0.05 by mass EDTA-2K (manufactured by Dojindo Laboratories) as a hemoglobin-stabilizing agent; were dissolved, to obtain Preparation Liquid A for analyzing hemoglobins at pH 7.5.

2. Measurement of Hemoglobins

A blood sample was used as the sample containing hemoglobins. Using Preparation Liquid A for analyzing hemoglobins, the blood sample was consecutively subjected to 20 times of measurement to measure HbA1c% with an automatic hemoglobin analyzer HLC-723 G11 STD Mode (manufactured by Tosoh Corporation; measurement time, 30 seconds/test). Subsequently, pure water was subjected to the measurement to measure the carry-over value. From the results of the consecutive measurement, the average value of HbA1c% and its coefficient of variation (CV%) were calculated.

TSK gel G11 (Tosoh Corporation) was used as the analytical column, and Liquids 1, 2, and 3 of G11 Eluent (Tosoh Corporation) were used eluents.

The carry-over value was calculated according to the following Formula B:

carry-over value (%) = (total sum of all peak areas detected in pure water measurement / total sum of all peak areas detected in sample measurement immediately before pure water measurement) × 100.

(Example 2)

Preparation Liquid B for analyzing hemoglobins was obtained in the same manner as Preparation Liquid A for analyzing hemoglobins except that, as the surfactant included in the preparation liquid, polyoxyethylene branched nonylcyclohexyl ether (manufactured by MERCK, trade name: Triton N-101 reduced) was used instead of polyoxyethylene (10) isooctylcyclohexyl ether. The same evaluation as in Example 1 was carried out except that Preparation Liquid B for analyzing hemoglobins was used instead of Preparation Liquid A for analyzing hemoglobins.

(Example 3)

Preparation Liquid C for analyzing hemoglobins was obtained in the same manner as Preparation Liquid A for analyzing hemoglobins except that, as the surfactant included in the preparation liquid, dicyclohexyl-18-crown-6 (manufactured by Nacalai Tesque, Inc.) was used instead of polyoxyethylene (10) isooctylcyclohexyl ether, and that the concentration of the surfactant was 0.05% by mass. The same evaluation as in Example 1 was carried out except that Preparation Liquid C for analyzing hemoglobins was used instead of Preparation Liquid A for analyzing hemoglobins.

(Example 4)

Preparation Liquid D for analyzing hemoglobins was obtained in the same manner as Preparation Liquid A for analyzing hemoglobins except that, as the surfactant included in the preparation liquid, 1-cyclohexyl-2-pyrrolidone (manufactured by Tokyo Chemical Industry Co., Ltd.) was used instead of polyoxyethylene (10) isooctylcyclohexyl ether. The same evaluation as in Example 1 was carried out except that Preparation Liquid D for analyzing hemoglobins was used instead of Preparation Liquid A for analyzing hemoglobins.

(Comparative Example 1)

Preparation Liquid X for analyzing hemoglobins was obtained in the same manner as Preparation Liquid A for analyzing hemoglobins except that, as the surfactant included in the preparation liquid, polyoxyethylene (10) octylphenyl ether (manufactured by MERCK, trade name: Triton X-100) (which has been conventionally used, and produces octylphenol, which is classified as an endocrine disruptor, as a degradation product) was used instead of polyoxyethylene (10) isooctylcyclohexyl ether. The same evaluation as in Example 1 was carried out except that Preparation Liquid X for analyzing hemoglobins was used instead of Preparation Liquid A for analyzing hemoglobins.

(Comparative Example 2)

Preparation Liquid Y for analyzing hemoglobins was obtained in the same manner as Preparation Liquid A for analyzing hemoglobins except that, as the surfactant included in the preparation liquid, polyoxyethylene (40) isooctylcyclohexyl ether (manufactured by MERCK, trade name: Triton X-405 reduced) was used instead of polyoxyethylene (10) isooctylcyclohexyl ether. The same evaluation as in Example 1 was carried out except that Preparation Liquid Y for analyzing hemoglobins was used instead of Preparation Liquid A for analyzing hemoglobins.

(Example 5)

Preparation Liquid B for analyzing hemoglobins and Preparation Liquid C for analyzing hemoglobins were mixed together at a mass ratio of 9:1, to obtain Preparation Liquid E1 for analyzing hemoglobins, which comprises polyoxyethylene (10) isooctylcyclohexyl ether and polyoxyethylene branched nonylcyclohexyl ether at 0.09% by mass and 0.01% by mass, respectively. The same evaluation as in Example 1 was carried out except that Preparation Liquid E1 for analyzing hemoglobins was used instead of Preparation Liquid A for analyzing hemoglobins.

(Example 6)

Preparation Liquid B for analyzing hemoglobins and Preparation Liquid C for analyzing hemoglobins were mixed together at a mass ratio of 3:1, to obtain Preparation Liquid E2 for analyzing hemoglobins, which comprises polyoxyethylene (10) isooctylcyclohexyl ether and polyoxyethylene branched nonylcyclohexyl ether at 0.075% by mass and 0.025% by mass, respectively. The same evaluation as in Example 1 was carried out except that Preparation Liquid E2 for analyzing hemoglobins was used instead of Preparation Liquid A for analyzing hemoglobins.

(Example 7)

Preparation Liquid B for analyzing hemoglobins and Preparation Liquid C for analyzing hemoglobins were mixed together at a mass ratio of 1:1, to obtain Preparation Liquid E3 for analyzing hemoglobins, which comprises polyoxyethylene (10) isooctylcyclohexyl ether and polyoxyethylene branched nonylcyclohexyl ether at 0.05% by mass and 0.05% by mass, respectively. The same evaluation as in Example 1 was carried out except that Preparation Liquid E3 for analyzing hemoglobins was used instead of Preparation Liquid A for analyzing hemoglobins.

(Example 8)

Preparation Liquid B for analyzing hemoglobins and Preparation Liquid C for analyzing hemoglobins were mixed together at a mass ratio of 1:3, to obtain Preparation Liquid E4 for analyzing hemoglobins, which comprises polyoxyethylene (10) isooctylcyclohexyl ether and polyoxyethylene branched nonylcyclohexyl ether at 0.025% by mass and 0.075% by mass, respectively. The same evaluation as in Example 1 was carried out except that Preparation Liquid E4 for analyzing hemoglobins was used instead of Preparation Liquid A for analyzing hemoglobins.

(Example 9)

Preparation Liquid B for analyzing hemoglobins and Preparation Liquid C for analyzing hemoglobins were mixed together at a mass ratio of 1:9, to obtain Preparation Liquid E5 for analyzing hemoglobins, which comprises polyoxyethylene (10) isooctylcyclohexyl ether and polyoxyethylene branched nonylcyclohexyl ether at 0.01% by mass and 0.09% by mass, respectively. The same evaluation as in Example 1 was carried out except that Preparation Liquid E5 for analyzing hemoglobins was used instead of Preparation Liquid A for analyzing hemoglobins.

(Example 10)

Preparation Liquid F1 for analyzing hemoglobins was obtained in the same manner as Preparation Liquid A for analyzing hemoglobins except that the concentration of the surfactant included in the preparation liquid was 1.00% by mass instead of 0.10% by mass. The same evaluation as in Example 1 was carried out except that Preparation Liquid F1 for analyzing hemoglobins was used instead of Preparation Liquid A for analyzing hemoglobins.

(Example 11)

Preparation Liquid F2 for analyzing hemoglobins was obtained in the same manner as Preparation Liquid A for analyzing hemoglobins except that the concentration of the surfactant included in the preparation liquid was 0.50% by mass instead of 0.10% by mass. The same evaluation as in Example 1 was carried out except that Preparation Liquid F2 for analyzing hemoglobins was used instead of Preparation Liquid A for analyzing hemoglobins.

(Example 12)

Preparation Liquid F3 for analyzing hemoglobins was obtained in the same manner as Preparation Liquid A for analyzing hemoglobins except that the concentration of the surfactant included in the preparation liquid was 0.25% by mass instead of 0.10% by mass. The same evaluation as in Example 1 was carried out except that Preparation Liquid F3 for analyzing hemoglobins was used instead of Preparation Liquid A for analyzing hemoglobins.

(Example 13)

Preparation Liquid F4 for analyzing hemoglobins was obtained in the same manner as Preparation Liquid A for analyzing hemoglobins except that the concentration of the surfactant included in the preparation liquid was 0.05% by mass instead of 0.10% by mass. The same evaluation as in Example 1 was carried out except that Preparation Liquid F4 for analyzing hemoglobins was used instead of Preparation Liquid A for analyzing hemoglobins.

(Example 14)

Preparation Liquid F5 for analyzing hemoglobins was obtained in the same manner as Preparation Liquid A for analyzing hemoglobins except that the concentration of the surfactant included in the preparation liquid was 0.01% by mass instead of 0.10% by mass. The same evaluation as in Example 1 was carried out except that Preparation Liquid F5 for analyzing hemoglobins was used instead of Preparation Liquid A for analyzing hemoglobins.

(Example 15)

Preparation Liquid G1 for analyzing hemoglobins was obtained in the same manner as Preparation Liquid A for analyzing hemoglobins except that the pH was adjusted to 5.5 by using 0.100% by mass EDTA-2K as the stabilizing agent dissolved in the preparation liquid. The same evaluation as in Example 1 was carried out except that Preparation Liquid G1 for analyzing hemoglobins was used instead of Preparation Liquid A for analyzing hemoglobins.

(Example 16)

Preparation Liquid G2 for analyzing hemoglobins was obtained in the same manner as Preparation Liquid A for analyzing hemoglobins except that the pH was adjusted to 6.5 by using 0.033% by mass EDTA-4Na and 0.067% by mass EDTA-2K as the stabilizing agent dissolved in the preparation liquid. The same evaluation as in Example 1 was carried out except that Preparation Liquid G2 for analyzing hemoglobins was used instead of Preparation Liquid A for analyzing hemoglobins.

(Example 17)

Preparation Liquid G3 for analyzing hemoglobins was obtained in the same manner as Preparation Liquid A for analyzing hemoglobins except that the pH was adjusted to 8.5 by using 0.055% by mass EDTA-4Na and 0.045% by mass EDTA-2K as the stabilizing agent dissolved in the preparation liquid. The same evaluation as in Example 1 was carried out except that Preparation Liquid G3 for analyzing hemoglobins was used instead of Preparation Liquid A for analyzing hemoglobins.

(Example 18)

Preparation Liquid G4 for analyzing hemoglobins was obtained in the same manner as Preparation Liquid A for analyzing hemoglobins except that the pH was adjusted to 9.5 by using 0.064% by mass EDTA-4Na and 0.036% by mass EDTA-2K as the stabilizing agent dissolved in the preparation liquid. The same evaluation as in Example 1 was carried out except that Preparation Liquid G4 for analyzing hemoglobins was used instead of Preparation Liquid A for analyzing hemoglobins.

(Example 19)

Preparation Liquid H1 for analyzing hemoglobins was obtained in the same manner as Preparation Liquid A for analyzing hemoglobins except that, as the surfactant included in the preparation liquid, polyoxyethylene (5) cholesteryl ether (manufactured by Nihon Emulsion Co., Ltd., trade name: EMALEX CS-5; HLB value = 7) was used instead of polyoxyethylene (10) isooctylcyclohexyl ether, and that the concentration of the surfactant was 0.05% by mass. The same evaluation as in Example 1 was carried out except that Preparation Liquid H1 for analyzing hemoglobins was used instead of Preparation Liquid A for analyzing hemoglobins.

(Example 20)

Preparation Liquid H2 for analyzing hemoglobins was obtained in the same manner as Preparation Liquid A for analyzing hemoglobins except that, as the surfactant included in the preparation liquid, polyoxyethylene (10) cholesteryl ether (manufactured by Nihon Emulsion Co., Ltd., trade name: EMALEX CS-10; HLB value = 10) was used instead of polyoxyethylene (10) isooctylcyclohexyl ether. The same evaluation as in Example 1 was carried out except that Preparation Liquid H2 for analyzing hemoglobins was used instead of Preparation Liquid A for analyzing hemoglobins.

(Example 21)

Preparation Liquid H3 for analyzing hemoglobins was obtained in the same manner as Preparation Liquid A for analyzing hemoglobins except that, as the surfactant included in the preparation liquid, polyoxyethylene (15) cholesteryl ether (manufactured by Nihon Emulsion Co., Ltd., trade name: EMALEX CS-15; HLB value = 11) was used instead of polyoxyethylene (10) isooctylcyclohexyl ether. The same evaluation as in Example 1 was carried out except that Preparation Liquid H3 for analyzing hemoglobins was used instead of Preparation Liquid A for analyzing hemoglobins.

(Example 22)

Preparation Liquid H4 for analyzing hemoglobins was obtained in the same manner as Preparation Liquid A for analyzing hemoglobins except that, as the surfactant included in the preparation liquid, polyoxyethylene (20) cholesteryl ether (manufactured by Nihon Emulsion Co., Ltd., trade name: EMALEX CS-20; HLB value = 12) was used instead of polyoxyethylene (10) isooctylcyclohexyl ether. The same evaluation as in Example 1 was carried out except that Preparation Liquid H4 for analyzing hemoglobins was used instead of Preparation Liquid A for analyzing hemoglobins.

(Example 23)

Preparation Liquid H5 for analyzing hemoglobins was obtained in the same manner as Preparation Liquid A for analyzing hemoglobins except that, as the surfactant included in the preparation liquid, polyoxyethylene (24) cholesteryl ether (manufactured by Nihon Emulsion Co., Ltd., trade name: EMALEX CS-24; HLB value = 13) was used instead of polyoxyethylene (10) isooctylcyclohexyl ether. The same evaluation as in Example 1 was carried out except that Preparation Liquid H5 for analyzing hemoglobins was used instead of Preparation Liquid A for analyzing hemoglobins.

(Example 24)

Preparation Liquid H6 for analyzing hemoglobins was obtained in the same manner as Preparation Liquid A for analyzing hemoglobins except that, as the surfactant included in the preparation liquid, polyoxyethylene (30) cholesteryl ether (manufactured by Nihon Emulsion Co., Ltd., trade name: EMALEX CS-30; HLB value = 14) was used instead of polyoxyethylene (10) isooctylcyclohexyl ether. The same evaluation as in Example 1 was carried out except that Preparation Liquid H6 for analyzing hemoglobins was used instead of Preparation Liquid A for analyzing hemoglobins.

(Example 25)

Preparation Liquid I1 for analyzing hemoglobins was obtained in the same manner as Preparation Liquid A for analyzing hemoglobins except that, as the surfactant included in the preparation liquid, polyoxyethylene (10) phytosteryl ether (manufactured by Nihon Emulsion Co., Ltd., trade name: EMALEX PS-10; HLB value = 9) was used instead of polyoxyethylene (10) isooctylcyclohexyl ether. The same evaluation as in Example 1 was carried out except that Preparation Liquid I1 for analyzing hemoglobins was used instead of Preparation Liquid A for analyzing hemoglobins.

(Example 26)

Preparation Liquid I2 for analyzing hemoglobins was obtained in the same manner as Preparation Liquid A for analyzing hemoglobins except that, as the surfactant included in the preparation liquid, polyoxyethylene (20) phytosteryl ether (manufactured by Nihon Emulsion Co., Ltd., trade name: EMALEX PS-20; HLB value = 12) was used instead of polyoxyethylene (10) isooctylcyclohexyl ether. The same evaluation as in Example 1 was carried out except that Preparation Liquid I2 for analyzing hemoglobins was used instead of Preparation Liquid A for analyzing hemoglobins.

(Example 27)

Preparation Liquid I3 for analyzing hemoglobins was obtained in the same manner as Preparation Liquid A for analyzing hemoglobins except that, as the surfactant included in the preparation liquid, polyoxyethylene (25) phytosteryl ether (manufactured by Nihon Emulsion Co., Ltd., trade name: EMALEX PS-25; HLB value = 13) was used instead of polyoxyethylene (10) isooctylcyclohexyl ether. The same evaluation as in Example 1 was carried out except that Preparation Liquid I3 for analyzing hemoglobins was used instead of Preparation Liquid A for analyzing hemoglobins.

(Example 28)

Preparation Liquid I4 for analyzing hemoglobins was obtained in the same manner as Preparation Liquid A for analyzing hemoglobins except that, as the surfactant included in the preparation liquid, polyoxyethylene (30) phytosteryl ether (manufactured by Nihon Emulsion Co., Ltd., trade name: EMALEX PS-30; HLB value = 14) was used instead of polyoxyethylene (10) isooctylcyclohexyl ether. The same evaluation as in Example 1 was carried out except that Preparation Liquid I4 for analyzing hemoglobins was used instead of Preparation Liquid A for analyzing hemoglobins.

The performance of each preparation liquid for analyzing hemoglobins was evaluated for the reproducibility during the consecutive measurement and the washing action on the apparatus channel, according to the criteria shown in Table 1.

[Table 1]

| Performance | Consecutive reproducibility | Hemolytic/washing action |
|---|---|---|
| Very good (A) | CV% ≤ 1.0 | CO% ≤ 1.0 |
| Good (B) | 1.0 ≤ CV% ≤ 2.0 | 1.0 ≤ CO% ≤ 2.0 |
| Poor (C) | 2.0 ≤ CV% | 2.0 ≤ CO% |

The HLB values of the surfactants used in Examples 1 to 28 and Comparative Examples 1 and 2 are shown in Table 2.

[Table 2]

| | | | Surfactant | HLB value |
|---|---|---|---|---|
| Example | | 1 | Polyoxyethylene (10) isooctylcyclohexyl ether | 13.1 |
| | | 2 | Polyoxyethylene branched nonylcyclohexyl ether | 6.5 |
| | | 3 | Dicyclohexyl-18-crown-6 | 11.2 |
| | | 4 | 1-Cyclohexyl-2-pyrrolidone | - |
| | | 19 | Polyoxyethylene (5) cholesteryl ether | 7.6 |
| | | 20 | Polyoxyethylene (10) cholesteryl ether | 10.8 |
| | | 21 | Polyoxyethylene (15) cholesteryl ether | 12.7 |
| | | 22 | Polyoxyethylene (20) cholesteryl ether | 14.0 |
| | | 23 | Polyoxyethylene (24) cholesteryl ether | 14.7 |
| | | 24 | Polyoxyethylene (30) cholesteryl ether | 15.5 |
| | | 25 | Polyoxyethylene (10) phytosteryl ether | 10.5 |
| | | 26 | Polyoxyethylene (20) phytosteryl ether | 13.7 |
| | | 27 | Polyoxyethylene (25) phytosteryl ether | 14.6 |
| | | 28 | Polyoxyethylene (30) phytosteryl ether | 15.3 |
| Comparative Example | | 1 | Polyoxyethylene (10) octylphenyl ether | 14.1 |
| | | 2 | Polyoxyethylene (40) isooctylcyclohexyl ether | 18.0 |
| | | 3 | Octaethyleneglycol monododecyl ether | 13.7 |

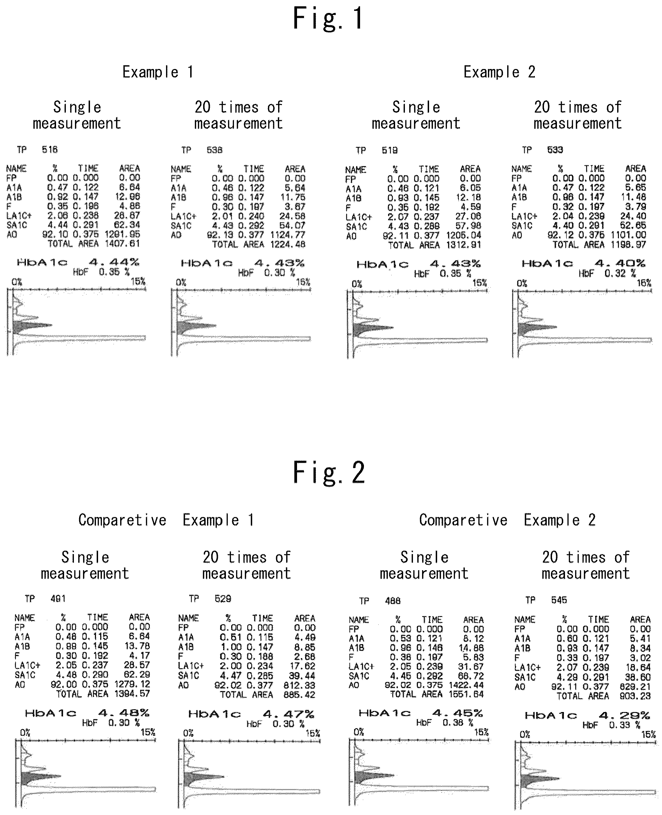

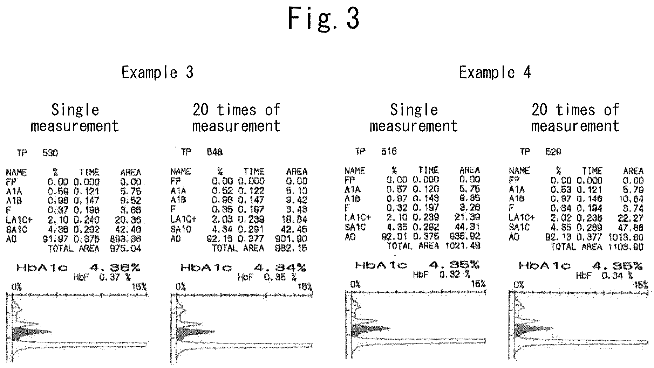

The results of the 20 times of measurement that were consecutively carried out, the average HbA1c% values, CV%, and the carry-over values (CO%) obtained in Examples 1 to 28 and Comparative Examples 1 and 2 are listed in Tables 3 and 4. The measured chromatograms obtained in Examples 1 and 2 are shown in FIG. 1; the measured chromatograms obtained in Examples 3 and 4 are shown in FIG. 2; and the measured chromatograms obtained in Comparative Examples 1 and 2 are shown in FIG. 3. According to FIGs. 1 and 2, highly reproducible chromatograms resulting from favorable hemolytic action were obtained in Examples 1 and 2, and Comparative Example 1, wherein occurrence of unknown peaks or a decrease in the number of theoretical plates was not found.

[Table 3]

| Measurement target | Example | | | | | | | | | | | | | | |
|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 |
| | HbA1c % | | | | | | | | | | | | | | |
| 1st | 4.44 | 4.43 | 4.36 | 4.35 | 4.38 | 4.43 | 4.43 | 4.41 | 4.41 | 4.44 | 4.48 | 4.52 | 4.53 | 4.55 | 4.45 |
| 2nd | 4.51 | 4.44 | 4.26 | 4.29 | 4.34 | 4.40 | 4.36 | 4.41 | 4.41 | 4.41 | 4.45 | 4.50 | 4.50 | 4.53 | 4.39 |
| 3rd | 4.37 | 4.46 | 4.30 | 4.27 | 4.31 | 4.35 | 4.37 | 4.38 | 4.42 | 4.41 | 4.48 | 4.48 | 4.47 | 4.51 | 4.39 |
| 4th | 4.42 | 4.47 | 4.32 | 4.32 | 4.34 | 4.38 | 4.39 | 4.40 | 4.42 | 4.44 | 4.45 | 4.51 | 4.48 | 4.51 | 4.37 |
| 5th | 4.42 | 4.43 | 4.32 | 4.28 | 4.34 | 4.41 | 4.41 | 4.43 | 4.44 | 4.49 | 4.48 | 4.47 | 4.50 | 4.51 | 4.36 |
| 6th | 4.44 | 4.42 | 4.32 | 4.29 | 4.34 | 4.41 | 4.44 | 4.46 | 4.43 | 4.47 | 4.44 | 4.45 | 4.48 | 4.43 | 4.39 |
| 7th | 4.44 | 4.43 | 4.30 | 4.31 | 4.36 | 4.42 | 4.47 | 4.43 | 4.44 | 4.46 | 4.43 | 4.50 | 4.45 | 4.49 | 4.43 |
| 8th | 4.42 | 4.44 | 4.28 | 4.33 | 4.40 | 4.47 | 4.47 | 4.42 | 4.44 | 4.44 | 4.50 | 4.47 | 4.44 | 4.48 | 4.42 |
| 9th | 4.45 | 4.43 | 4.29 | 4.34 | 4.43 | 4.43 | 4.45 | 4.42 | 4.40 | 4.43 | 4.51 | 4.47 | 4.43 | 4.49 | 4.43 |
| 10th | 4.41 | 4.44 | 4.30 | 4.31 | 4.46 | 4.47 | 4.40 | 4.41 | 4.42 | 4.44 | 4.48 | 4.44 | 4.41 | 4.39 | 4.45 |
| 11th | 4.42 | 4.44 | 4.29 | 4.32 | 4.43 | 4.42 | 4.37 | 4.35 | 4.35 | 4.41 | 4.44 | 4.46 | 4.45 | 4.41 | 4.42 |
| 12th | 4.43 | 4.43 | 4.29 | 4.30 | 4.40 | 4.40 | 4.36 | 4.38 | 4.37 | 4.42 | 4.46 | 4.47 | 4.46 | 4.34 | 4.43 |
| 13th | 4.39 | 4.44 | 4.28 | 4.30 | 4.35 | 4.33 | 4.37 | 4.37 | 4.40 | 4.45 | 4.46 | 4.47 | 4.45 | 4.39 | 4.36 |
| 14th | 4.43 | 4.41 | 4.30 | 4.30 | 4.38 | 4.34 | 4.37 | 4.37 | 4.39 | 4.46 | 4.48 | 4.48 | 4.44 | 4.41 | 4.35 |
| 15th | 4.40 | 4.39 | 4.27 | 4.28 | 4.34 | 4.36 | 4.35 | 4.37 | 4.44 | 4.48 | 4.46 | 4.47 | 4.44 | 4.38 | 4.36 |
| 16th | 4.43 | 4.43 | 4.30 | 4.28 | 4.35 | 4.37 | 4.37 | 4.41 | 4.43 | 4.46 | 4.43 | 4.47 | 4.40 | 4.40 | 4.41 |
| 17th | 4.39 | 4.42 | 4.31 | 4.32 | 4.36 | 4.39 | 4.42 | 4.39 | 4.43 | 4.49 | 4.44 | 4.46 | 4.46 | 4.47 | 4.38 |
| 18th | 4.44 | 4.40 | 4.36 | 4.31 | 4.39 | 4.43 | 4.44 | 4.38 | 4.42 | 4.50 | 4.43 | 4.49 | 4.48 | 4.51 | 4.40 |
| 19th | 4.44 | 4.44 | 4.36 | 4.33 | 4.37 | 4.38 | 4.38 | 4.40 | 4.43 | 4.51 | 4.46 | 4.49 | 4.49 | 4.51 | 4.38 |
| 20th | 4.43 | 4.40 | 4.34 | 4.35 | 4.39 | 4.41 | 4.34 | 4.41 | 4.44 | 4.49 | 4.49 | 4.50 | 4.45 | 4.47 | 4.40 |
| Mean | 4.43 | 4.43 | 4.31 | 4.31 | 4.37 | 4.40 | 4.40 | 4.40 | 4.42 | 4.46 | 4.46 | 4.48 | 4.46 | 4.46 | 4.40 |
| CV % | 0.63 | 0.43 | 0.66 | 0.53 | 0.84 | 0.85 | 0.90 | 0.58 | 0.54 | 0.68 | 0.52 | 0.44 | 0.69 | 1.31 | 0.68 |
| Carry Over % | 0.54 | 0.57 | 1.61 | 1.99 | 0.57 | 0.55 | 0.72 | 0.54 | 0.43 | 1.74 | 1.51 | 0.68 | 0.57 | 0.52 | 0.68 |

[Table 4]

| Measurement target | Example | | | | | | | | | | | | | Comparative Example | |
|---|---|---|---|---|---|---|---|---|---|---|---|---|---|---|---|
| | 16 | 17 | 18 | 19 | 20 | 21 | 22 | 23 | 24 | 25 | 26 | 27 | 28 | 1 | 2 |
| | HbA1c% | | | | | | | | | | | | | | |
| 1st | 4.45 | 4.47 | 4.45 | 4.51 | 4.49 | 4.50 | 4.48 | 4.47 | 4.47 | 4.44 | 4.38 | 4.41 | 4.27 | 4.48 | 4.45 |
| 2nd | 4.39 | 4.41 | 4.38 | 4.42 | 4.42 | 4.43 | 4.46 | 4.46 | 4.48 | 4.49 | 4.44 | 4.41 | 4.39 | 4.41 | 4.32 |
| 3rd | 4.39 | 4.43 | 4.36 | 4.39 | 4.43 | 4.44 | 4.46 | 4.46 | 4.47 | 4.45 | 4.40 | 4.37 | 4.43 | 4.43 | 4.31 |
| 4th | 4.37 | 4.46 | 4.39 | 4.44 | 4.42 | 4.47 | 4.42 | 4.47 | 4.48 | 4.46 | 4.40 | 4.42 | 4.38 | 4.44 | 4.22 |
| 5th | 4.41 | 4.44 | 4.40 | 4.40 | 4.41 | 4.46 | 4.48 | 4.47 | 4.50 | 4.48 | 4.44 | 4.42 | 4.41 | 4.43 | 4.22 |
| 6th | 4.44 | 4.45 | 4.41 | 4.42 | 4.44 | 4.44 | 4.47 | 4.45 | 4.47 | 4.48 | 4.45 | 4.40 | 4.43 | 4.50 | 4.26 |
| 7th | 4.43 | 4.42 | 4.43 | 4.40 | 4.42 | 4.46 | 4.44 | 4.44 | 4.47 | 4.44 | 4.43 | 4.41 | 4.42 | 4.51 | 4.29 |
| 8th | 4.42 | 4.46 | 4.43 | 4.44 | 4.40 | 4.46 | 4.41 | 4.45 | 4.46 | 4.42 | 4.41 | 4.48 | 4.42 | 4.50 | 4.27 |
| 9th | 4.44 | 4.46 | 4.42 | 4.43 | 4.43 | 4.45 | 4.44 | 4.47 | 4.48 | 4.49 | 4.45 | 4.45 | 4.42 | 4.48 | 4.24 |
| 10th | 4.41 | 4.41 | 4.40 | 4.41 | 4.43 | 4.46 | 4.47 | 4.47 | 4.46 | 4.48 | 4.45 | 4.42 | 4.46 | 4.46 | 4.28 |
| 11th | 4.38 | 4.42 | 4.37 | 4.36 | 4.44 | 4.45 | 4.42 | 4.47 | 4.46 | 4.45 | 4.42 | 4.41 | 4.41 | 4.47 | 4.19 |
| 12th | 4.39 | 4.41 | 4.38 | 4.41 | 4.41 | 4.46 | 4.45 | 4.49 | 4.45 | 4.46 | 4.41 | 4.45 | 4.43 | 4.44 | 4.21 |
| 13th | 4.43 | 4.43 | 4.37 | 4.38 | 4.42 | 4.48 | 4.43 | 4.48 | 4.46 | 4.47 | 4.45 | 4.44 | 4.43 | 4.42 | 4.16 |
| 14th | 4.37 | 4.43 | 4.42 | 4.38 | 4.46 | 4.45 | 4.46 | 4.50 | 4.46 | 4.48 | 4.47 | 4.41 | 4.48 | 4.44 | 4.30 |
| 15th | 4.40 | 4.42 | 4.41 | 4.38 | 4.42 | 4.46 | 4.43 | 4.50 | 4.46 | 4.44 | 4.44 | 4.45 | 4.41 | 4.46 | 4.23 |
| 16th | 4.36 | 4.43 | 4.39 | 4.40 | 4.43 | 4.47 | 4.42 | 4.47 | 4.47 | 4.47 | 4.42 | 4.48 | 4.43 | 4.46 | 4.20 |
| 17th | 4.40 | 4.44 | 4.41 | 4.39 | 4.44 | 4.46 | 4.42 | 4.46 | 4.48 | 4.50 | 4.46 | 4.44 | 4.48 | 4.47 | 4.24 |
| 18th | 4.42 | 4.47 | 4.41 | 4.35 | 4.44 | 4.46 | 4.45 | 4.46 | 4.47 | 4.48 | 4.44 | 4.42 | 4.47 | 4.48 | 4.26 |
| 19th | 4.46 | 4.46 | 4.41 | 4.38 | 4.43 | 4.47 | 4.42 | 4.47 | 4.47 | 4.45 | 4.43 | 4.47 | 4.45 | 4.52 | 4.28 |
| 20th | 4.48 | 4.46 | 4.47 | 4.42 | 4.43 | 4.46 | 4.45 | 4.47 | 4.48 | 4.52 | 4.43 | 4.48 | 4.45 | 4.47 | 4.29 |
| Mean | 4.41 | 4.44 | 4.41 | 4.41 | 4.43 | 4.46 | 4.44 | 4.47 | 4.47 | 4.47 | 4.43 | 4.43 | 4.42 | 4.46 | 4.26 |
| CV % | 0.71 | 0.46 | 0.61 | 0.77 | 0.43 | 0.33 | 0.48 | 0.33 | 0.25 | 0.53 | 0.50 | 0.66 | 0.99 | 0.67 | 1.41 |
| Carry Over % | 0.59 | 0.58 | 0.70 | 0.84 | 0.58 | 0.44 | 0.46 | 0.44 | 0.45 | 0.52 | 0.45 | 0.45 | 0.42 | 0.67 | 2.33 |

According to Tables 3 and 4, the measurement results in Examples 1 and 2 were found to be highly reproducible (CV% < 1.0%) similarly to those in Comparative Example 1. Further, as can be seen from the carry-over values, Examples 1 and 2 showed hemolytic and washing actions that are equivalent to or higher than those of Comparative Example 1, indicating very good results. On the other hand, Comparative Example 2 showed low reproducibility during the consecutive measurement, and showed a carry-over value that indicates insufficient washing ability for the apparatus channel. Further, according to FIG. 3, both Examples 3 and 4 showed highly reproducible measurement results (CV% < 1.0). Furthermore, regarding their carry-over values, favorable results (1.0% < CO < 2.0%) were obtained.

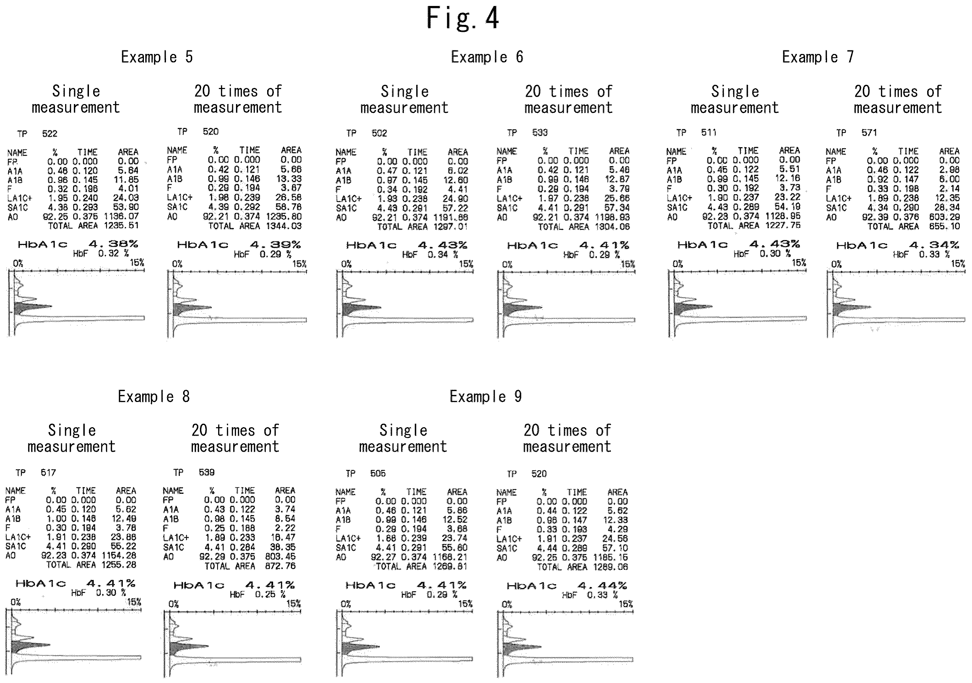

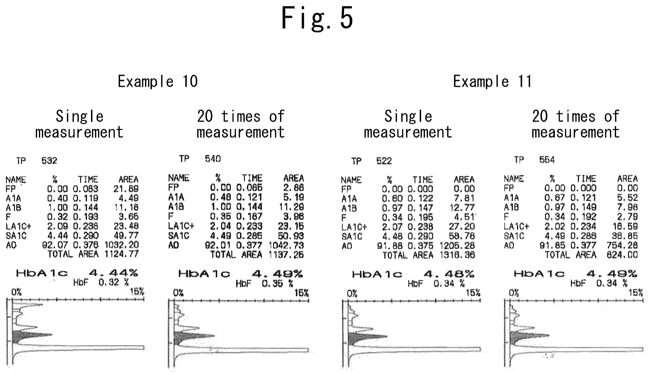

The chromatograms after the 20 times of measurement obtained in Examples 5 to 9 are shown in FIG. 5. According to the results in FIG. 4 and Tables 3 to 5, it can be seen that, at any mixing ratio between polyoxyethylene (10) isooctylcyclohexyl ether and polyoxyethylene branched nonylcyclohexyl ether, the hemolytic action of each of these is not deteriorated, and hence that contamination in the column and the apparatus channel can be sufficiently suppressed.

[Table 5]

| Performance | Example | | | | | | | | | | | | | | |
|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 |
| Consecutive reproducibility | A | A | A | A | A | A | A | A | A | A | A | A | A | B | A |
| Hemolytic/washing action | A | A | B | B | A | A | A | A | A | B | B | A | A | A | A |

| Performance | Example | | | | | | | | | | | | | Comparative Example | |
|---|---|---|---|---|---|---|---|---|---|---|---|---|---|---|---|
| | 16 | 17 | 18 | 19 | 20 | 21 | 22 | 23 | 24 | 25 | 26 | 27 | 28 | 1 | 2 |
| Consecutive reproducibility | A | A | A | A | A | A | A | A | A | A | A | A | A | A | B |
| Hemolytic/washing action | A | A | A | A | A | A | A | A | A | A | A | A | A | A | C |

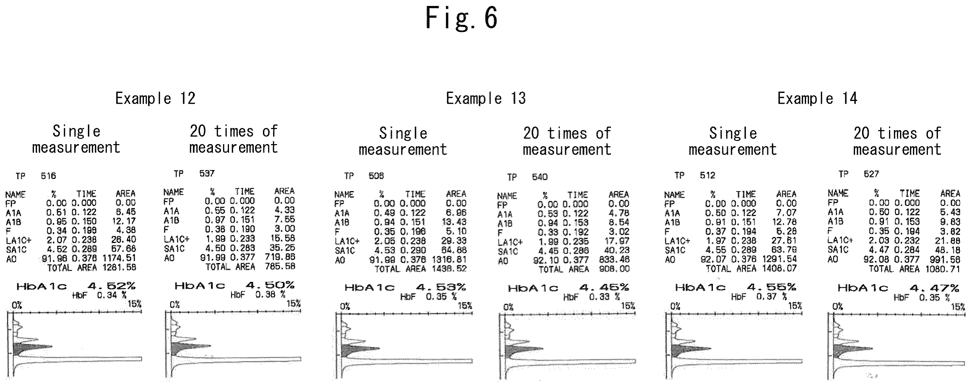

The chromatograms after the 20 times of measurement obtained in Examples 10 and 11 are shown in FIG. 5, and the chromatograms after the 20 times of measurement obtained in Examples 12 to 14 are shown in FIG. 6. When the surfactant concentration was within the range of 1.00% by mass to 0.01% by mass, highly reproducible measurement results were obtained. Also for the carry-over value, favorable results were obtained.

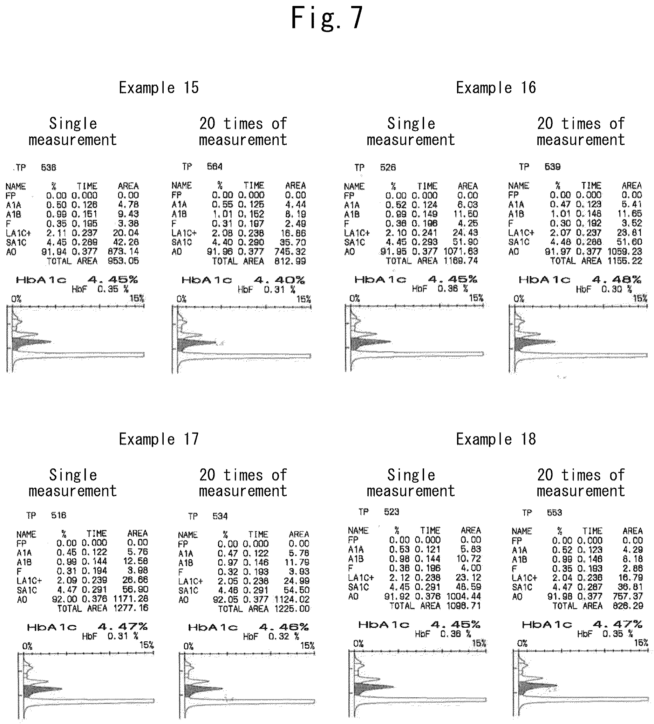

The chromatograms after the 20 times of measurement obtained in Examples 15 to 18 are shown in FIG. 7. According to the results in FIG. 7 and Tables 3 to 5, when the pH of the preparation liquid for analyzing hemoglobins was within the range of 5.5 to 9.5, no difference in the chromatogram occurred, and values of less than 1.0% were found for both the consecutive reproducibility and the carry-over.

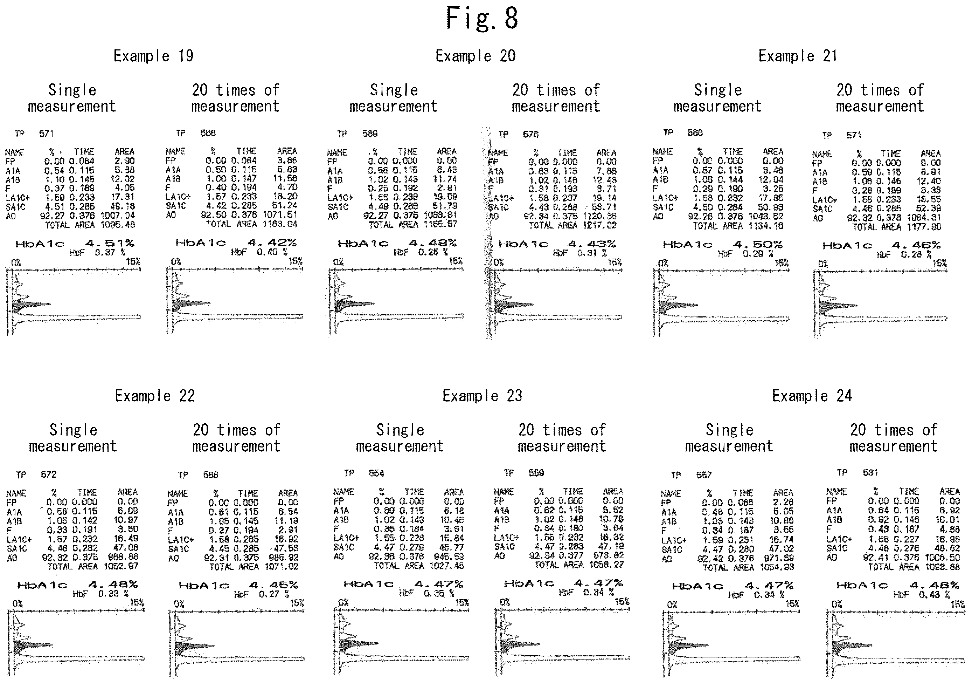

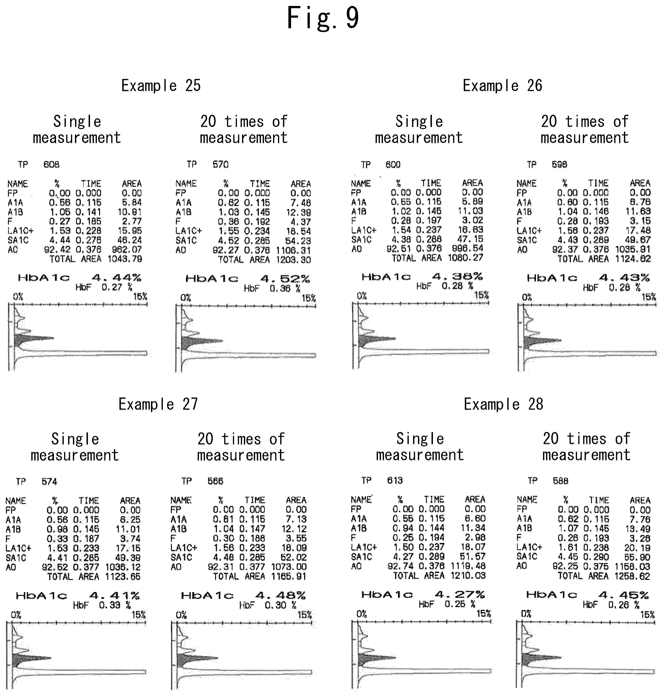

The chromatograms after the 20 times of measurement obtained in Examples 19 and 24 are shown in FIG. 8, and the chromatograms after the 20 times of measurement obtained in Examples 25 to 28 are shown in FIG. 9. According to the results in FIGs. 8 and 9, and Tables 3 to 5, when the HLB value of the surfactant was within the range of 6.5 to 15.5, highly reproducible chromatograms were obtained in all cases, and occurrence of unknown peaks or a decrease in the number of theoretical plates was not found. The carry-over values were also very good (less than 1.0%).

The present invention is an environmentally conscious invention since the surfactant contained in the preparation liquid for analyzing hemoglobins of the present invention does not produce, as degradation products, alkylphenols including octylphenol, which is classified as an endocrine disruptor. Thus, the invention is important from the viewpoint of achieving one of the goals of SDGs.

**Claims**

1. A preparation liquid for analyzing hemoglobins by liquid chromatography, the preparation liquid comprising at least one nonionic surfactant

which does not produce alkylphenol as a degradation product,
which comprises one or more cyclic skeletons in the molecule,
which comprises a polyoxyethylene group, and

which has an HLB value within the range of 6.5 to 15.5.

2. The preparation liquid for analyzing hemoglobins according to claim 1, wherein the cyclic skeleton constituting the nonionic surfactant comprises one or more selected from a cyclohexane skeleton, a sterane skeleton, a lactam, and a crown ether.

3. The preparation liquid for analyzing hemoglobins according to claim 1, comprising, as the nonionic surfactant, one or more selected from the following substances (1) to (4):

   (1) polyoxyethylene (10) isooctylcyclohexyl ether;
   (2) polyoxyethylene branched nonylcyclohexyl ether;
   (3) polyoxyethylene cholesteryl ether; and
   (4) polyoxyethylene phytosteryl ether.

4. The preparation liquid for analyzing hemoglobins according to claim 1 or 2, wherein the polyoxyethylene group constituting the nonionic surfactant has an average degree of polymerization within the range of 5 to 30.

5. The preparation liquid for analyzing hemoglobins according to any one of claims 1 to 3, wherein the content of the nonionic surfactant in the preparation liquid is within the range of 0.01 to 1.00% by mass.

6. The preparation liquid for analyzing hemoglobins according to any one of claims 1 to 3, having a pH within the range of 5.5 to 9.5.

7. A method of measuring hemoglobins, the method comprising the steps of: mixing the preparation liquid for analyzing hemoglobins according to any one of claims 1 to 3 with a sample containing hemoglobins, to obtain a measurement sample; and subjecting the measurement sample to measurement by liquid chromatography.

8. A measurement apparatus for analyzing hemoglobins, the apparatus having a function to dilute and mix, in the apparatus, the preparation liquid for analyzing hemoglobins according to any one of claims 1 to 3, and a sample containing hemoglobins.

# Fig. 1

### Example 1

#### Single measurement

TP 516

| NAME | % | TIME | AREA |
|---|---|---|---|
| FP | 0.00 | 0.000 | 0.00 |
| A1A | 0.47 | 0.122 | 6.64 |
| A1B | 0.92 | 0.147 | 12.96 |
| F | 0.35 | 0.196 | 4.86 |
| LA1C+ | 2.06 | 0.238 | 28.87 |
| SA1C | 4.44 | 0.291 | 62.34 |
| AO | 92.10 | 0.375 | 1281.95 |
| TOTAL AREA | | | 1407.61 |

HbA1c 4.44%
HbF 0.35%
0% — 15%

#### 20 times of measurement

TP 538

| NAME | % | TIME | AREA |
|---|---|---|---|
| FP | 0.00 | 0.000 | 0.00 |
| A1A | 0.46 | 0.122 | 5.64 |
| A1B | 0.96 | 0.147 | 11.75 |
| F | 0.30 | 0.197 | 3.67 |
| LA1C+ | 2.01 | 0.240 | 24.58 |
| SA1C | 4.43 | 0.292 | 54.07 |
| AO | 92.13 | 0.377 | 1124.77 |
| TOTAL AREA | | | 1224.48 |

HbA1c 4.43%
HbF 0.30%
0% — 15%

### Example 2

#### Single measurement

TP 519

| NAME | % | TIME | AREA |
|---|---|---|---|
| FP | 0.00 | 0.000 | 0.00 |
| A1A | 0.46 | 0.121 | 6.05 |
| A1B | 0.93 | 0.145 | 12.18 |
| F | 0.35 | 0.192 | 4.59 |
| LA1C+ | 2.07 | 0.237 | 27.06 |
| SA1C | 4.43 | 0.289 | 57.98 |
| AO | 92.11 | 0.377 | 1205.04 |
| TOTAL AREA | | | 1312.91 |

HbA1c 4.43%
HbF 0.35%
0% — 15%

#### 20 times of measurement

TP 533

| NAME | % | TIME | AREA |
|---|---|---|---|
| FP | 0.00 | 0.000 | 0.00 |
| A1A | 0.47 | 0.122 | 5.65 |
| A1B | 0.96 | 0.147 | 11.48 |
| F | 0.32 | 0.197 | 3.79 |
| LA1C+ | 2.04 | 0.239 | 24.40 |
| SA1C | 4.40 | 0.291 | 52.65 |
| AO | 92.12 | 0.375 | 1101.00 |
| TOTAL AREA | | | 1198.97 |

HbA1c 4.40%
HbF 0.32%
0% — 15%

# Fig. 2

### Comparetive Example 1

#### Single measurement

TP 491

| NAME | % | TIME | AREA |
|---|---|---|---|
| FP | 0.00 | 0.000 | 0.00 |
| A1A | 0.48 | 0.115 | 6.64 |
| A1B | 0.99 | 0.145 | 13.78 |
| F | 0.30 | 0.192 | 4.17 |
| LA1C+ | 2.05 | 0.237 | 28.57 |
| SA1C | 4.48 | 0.290 | 62.29 |
| AO | 92.00 | 0.375 | 1279.12 |
| TOTAL AREA | | | 1394.57 |

HbA1c 4.48%
HbF 0.30%
0% — 15%

#### 20 times of measurement

TP 529

| NAME | % | TIME | AREA |
|---|---|---|---|
| FP | 0.00 | 0.000 | 0.00 |
| A1A | 0.51 | 0.115 | 4.49 |
| A1B | 1.00 | 0.147 | 8.85 |
| F | 0.30 | 0.188 | 2.68 |
| LA1C+ | 2.00 | 0.234 | 17.62 |
| SA1C | 4.47 | 0.285 | 39.44 |
| AO | 92.02 | 0.377 | 812.33 |
| TOTAL AREA | | | 885.42 |

HbA1c 4.47%
HbF 0.30%
0% — 15%

### Comparetive Example 2

#### Single measurement

TP 488

| NAME | % | TIME | AREA |
|---|---|---|---|
| FP | 0.00 | 0.000 | 0.00 |
| A1A | 0.53 | 0.121 | 8.12 |
| A1B | 0.96 | 0.146 | 14.86 |
| F | 0.38 | 0.197 | 5.83 |
| LA1C+ | 2.05 | 0.239 | 31.67 |
| SA1C | 4.45 | 0.292 | 68.72 |
| AO | 92.02 | 0.375 | 1422.44 |
| TOTAL AREA | | | 1551.64 |

HbA1c 4.45%
HbF 0.38%
0% — 15%

#### 20 times of measurement

TP 545

| NAME | % | TIME | AREA |
|---|---|---|---|
| FP | 0.00 | 0.000 | 0.00 |
| A1A | 0.60 | 0.121 | 5.41 |
| A1B | 0.93 | 0.147 | 8.34 |
| F | 0.33 | 0.197 | 3.02 |
| LA1C+ | 2.07 | 0.239 | 18.64 |
| SA1C | 4.40 | 0.291 | 38.60 |
| AO | 92.11 | 0.377 | 829.21 |
| TOTAL AREA | | | 903.23 |

HbA1c 4.29%
HbF 0.33%
0% — 15%

# Fig. 3

Example 3

| Single measurement | 20 times of measurement |

TP  530

| NAME | % | TIME | AREA |
|---|---|---|---|
| FP | 0.00 | 0.000 | 0.00 |
| A1A | 0.59 | 0.121 | 5.75 |
| A1B | 0.98 | 0.147 | 9.52 |
| F | 0.37 | 0.196 | 3.66 |
| LA1C+ | 2.10 | 0.240 | 20.36 |
| SA1C | 4.36 | 0.292 | 42.40 |
| A0 | 91.97 | 0.375 | 893.36 |
| | | TOTAL AREA | 975.04 |

HbA1c  4.36%
HbF 0.37 %

0%                    15%

TP  546

| NAME | % | TIME | AREA |
|---|---|---|---|
| FP | 0.00 | 0.000 | 0.00 |
| A1A | 0.52 | 0.122 | 5.10 |
| A1B | 0.96 | 0.147 | 9.42 |
| F | 0.35 | 0.197 | 3.43 |
| LA1C+ | 2.03 | 0.239 | 19.84 |
| SA1C | 4.34 | 0.291 | 42.45 |
| A0 | 92.15 | 0.377 | 901.90 |
| | | TOTAL AREA | 982.15 |

HbA1c  4.34%
HbF 0.35 %

0%                    15%

Example 4

| Single measurement | 20 times of measurement |

TP  616

| NAME | % | TIME | AREA |
|---|---|---|---|
| FP | 0.00 | 0.000 | 0.00 |
| A1A | 0.57 | 0.120 | 5.75 |
| A1B | 0.97 | 0.149 | 9.85 |
| F | 0.32 | 0.197 | 3.26 |
| LA1C+ | 2.10 | 0.239 | 21.39 |
| SA1C | 4.35 | 0.292 | 44.31 |
| A0 | 92.01 | 0.376 | 936.92 |
| | | TOTAL AREA | 1021.49 |

HbA1c  4.35%
HbF 0.32 %

0%                    15%

TP  529

| NAME | % | TIME | AREA |
|---|---|---|---|
| FP | 0.00 | 0.000 | 0.00 |
| A1A | 0.53 | 0.121 | 5.79 |
| A1B | 0.87 | 0.146 | 10.64 |
| F | 0.34 | 0.194 | 3.74 |
| LA1C+ | 2.02 | 0.238 | 22.27 |
| SA1C | 4.35 | 0.289 | 47.86 |
| A0 | 92.13 | 0.377 | 1013.60 |
| | | TOTAL AREA | 1103.90 |

HbA1c  4.35%
HbF 0.34 %

0%                    15%

# Fig. 4

Example 5  Example 6  Example 7

Example 8  Example 9

# Fig. 5

## Example 10

### Single measurement

TP  532

| NAME | % | TIME | AREA |
|------|------|-------|------|
| FP | 0.00 | 0.083 | 21.89 |
| A1A | 0.40 | 0.119 | 4.49 |
| A1B | 1.00 | 0.144 | 11.18 |
| F | 0.32 | 0.193 | 3.65 |
| LA1C+ | 2.09 | 0.238 | 23.48 |
| SA1C | 4.44 | 0.290 | 49.77 |
| AO | 92.07 | 0.376 | 1032.20 |
| | | TOTAL AREA | 1124.77 |

HbA1c   4.44%
HbF  0.32 %

0%                                    15%

### 20 times of measurement

TP  540

| NAME | % | TIME | AREA |
|------|------|-------|------|
| FP | 0.00 | 0.085 | 2.86 |
| A1A | 0.48 | 0.121 | 5.19 |
| A1B | 1.00 | 0.144 | 11.28 |
| F | 0.35 | 0.187 | 3.96 |
| LA1C+ | 2.04 | 0.233 | 23.15 |
| SA1C | 4.49 | 0.285 | 50.93 |
| AO | 92.01 | 0.377 | 1042.73 |
| | | TOTAL AREA | 1137.26 |

HbA1c   4.49%
HbF  0.35 %

0%                                    15%

## Example 11

### Single measurement

TP  522

| NAME | % | TIME | AREA |
|------|------|-------|------|
| FP | 0.00 | 0.000 | 0.00 |
| A1A | 0.60 | 0.122 | 7.81 |
| A1B | 0.97 | 0.147 | 12.77 |
| F | 0.34 | 0.195 | 4.51 |
| LA1C+ | 2.07 | 0.238 | 27.20 |
| SA1C | 4.48 | 0.290 | 58.78 |
| AO | 91.88 | 0.375 | 1205.28 |
| | | TOTAL AREA | 1316.36 |

HbA1c   4.48%
HbF  0.34 %

0%                                    15%

### 20 times of measurement

TP  554

| NAME | % | TIME | AREA |
|------|------|-------|------|
| FP | 0.00 | 0.000 | 0.00 |
| A1A | 0.67 | 0.121 | 5.52 |
| A1B | 0.97 | 0.149 | 7.98 |
| F | 0.34 | 0.192 | 2.79 |
| LA1C+ | 2.02 | 0.234 | 16.59 |
| SA1C | 4.49 | 0.286 | 36.85 |
| AO | 91.85 | 0.377 | 754.28 |
| | | TOTAL AREA | 824.00 |

HbA1c   4.49%
HbF  0.34 %

0%                                    15%

EP 4 692 785 A1

# Fig. 6

## Example 12

### Single measurement

TP    516

| NAME | % | TIME | AREA |
|------|------|------|------|
| FP | 0.00 | 0.000 | 0.00 |
| A1A | 0.51 | 0.122 | 6.45 |
| A1B | 0.95 | 0.150 | 12.17 |
| F | 0.34 | 0.198 | 4.38 |
| LA1C+ | 2.07 | 0.238 | 26.40 |
| SA1C | 4.52 | 0.289 | 57.66 |
| A0 | 91.96 | 0.376 | 1174.51 |
| | | TOTAL AREA | 1281.58 |

HbA1c    4.52%
HbF  0.34 %

### 20 times of measurement

TP    537

| NAME | % | TIME | AREA |
|------|------|------|------|
| FP | 0.00 | 0.000 | 0.00 |
| A1A | 0.55 | 0.122 | 4.33 |
| A1B | 0.97 | 0.151 | 7.55 |
| F | 0.38 | 0.190 | 3.00 |
| LA1C+ | 1.99 | 0.233 | 15.58 |
| SA1C | 4.50 | 0.283 | 35.25 |
| A0 | 91.99 | 0.377 | 719.86 |
| | | TOTAL AREA | 785.58 |

HbA1c    4.50%
HbF  0.38 %

## Example 13

### Single measurement

TP    506

| NAME | % | TIME | AREA |
|------|------|------|------|
| FP | 0.00 | 0.000 | 0.00 |
| A1A | 0.49 | 0.122 | 6.96 |
| A1B | 0.94 | 0.151 | 13.43 |
| F | 0.35 | 0.196 | 5.10 |
| LA1C+ | 2.05 | 0.238 | 29.33 |
| SA1C | 4.53 | 0.290 | 64.66 |
| A0 | 91.89 | 0.376 | 1316.81 |
| | | TOTAL AREA | 1436.52 |

HbA1c    4.53%
HbF  0.35 %

### 20 times of measurement

TP    540

| NAME | % | TIME | AREA |
|------|------|------|------|
| FP | 0.00 | 0.000 | 0.00 |
| A1A | 0.53 | 0.122 | 4.78 |
| A1B | 0.94 | 0.153 | 8.54 |
| F | 0.33 | 0.192 | 3.02 |
| LA1C+ | 1.99 | 0.235 | 17.97 |
| SA1C | 4.45 | 0.286 | 40.23 |
| A0 | 92.10 | 0.377 | 833.46 |
| | | TOTAL AREA | 908.00 |

HbA1c    4.45%
HbF  0.33 %

## Example 14

### Single measurement

TP    512

| NAME | % | TIME | AREA |
|------|------|------|------|
| FP | 0.00 | 0.000 | 0.00 |
| A1A | 0.50 | 0.122 | 7.07 |
| A1B | 0.91 | 0.151 | 12.78 |
| F | 0.37 | 0.194 | 5.28 |
| LA1C+ | 1.97 | 0.238 | 27.61 |
| SA1C | 4.55 | 0.289 | 63.79 |
| A0 | 92.07 | 0.376 | 1291.54 |
| | | TOTAL AREA | 1408.07 |

HbA1c    4.55%
HbF  0.37 %

### 20 times of measurement

TP    527

| NAME | % | TIME | AREA |
|------|------|------|------|
| FP | 0.00 | 0.000 | 0.00 |
| A1A | 0.60 | 0.122 | 5.43 |
| A1B | 0.91 | 0.153 | 9.63 |
| F | 0.35 | 0.194 | 3.82 |
| LA1C+ | 2.03 | 0.232 | 21.88 |
| SA1C | 4.47 | 0.284 | 48.18 |
| A0 | 92.08 | 0.377 | 991.56 |
| | | TOTAL AREA | 1080.71 |

HbA1c    4.47%
HbF  0.35 %

# Fig. 7

### Example 15

**Single measurement**

```
.TP  536

NAME     %     TIME   AREA
FP     0.00 0.000     0.00
A1A    0.50 0.126     4.78
A1B    0.99 0.151     9.43
F      0.35 0.195     3.38
LA1C+  2.11 0.237    20.04
SA1C   4.45 0.289    42.28
AO    91.94 0.377   873.14
       TOTAL AREA   953.05

HbA1c    4.45%
     HbF  0.35 %
0%                  15%
```

**20 times of measurement**

```
TP  564

NAME     %     TIME   AREA
FP     0.00 0.000     0.00
A1A    0.55 0.125     4.44
A1B    1.01 0.152     8.19
F      0.31 0.197     2.49
LA1C+  2.08 0.238    16.86
SA1C   4.40 0.290    35.70
AO    91.96 0.377   745.32
       TOTAL AREA   812.99

HbA1c    4.40%
     HbF  0.31 %
0%                  15%
```

### Example 16

**Single measurement**

```
TP  526

NAME     %     TIME   AREA
FP     0.00 0.000     0.00
A1A    0.52 0.124     6.03
A1B    0.99 0.149    11.50
F      0.36 0.196     4.25
LA1C+  2.10 0.241    24.43
SA1C   4.45 0.293    51.90
AO    91.95 0.377  1071.63
       TOTAL AREA  1169.74

HbA1c    4.45%
     HbF  0.36 %
0%                  15%
```

**20 times of measurement**

```
TP  539

NAME     %     TIME   AREA
FP     0.00 0.000     0.00
A1A    0.47 0.129     5.41
A1B    1.01 0.148    11.65
F      0.30 0.192     3.52
LA1C+  2.07 0.237    23.81
SA1C   4.48 0.288    51.60
AO    91.97 0.377  1059.23
       TOTAL AREA  1155.22

HbA1c    4.48%
     HbF  0.30 %
0%                  15%
```

### Example 17

**Single measurement**

```
TP  516

NAME     %     TIME   AREA
FP     0.00 0.000     0.00
A1A    0.45 0.122     5.76
A1B    0.99 0.144    12.58
F      0.31 0.194     3.98
LA1C+  2.09 0.239    26.66
SA1C   4.47 0.291    56.90
AO    92.00 0.376  1171.28
       TOTAL AREA  1277.16

HbA1c    4.47%
     HbF  0.31 %
0%                  15%
```

**20 times of measurement**

```
TP  534

NAME     %     TIME   AREA
FP     0.00 0.000     0.00
A1A    0.47 0.122     5.78
A1B    0.97 0.146    11.79
F      0.32 0.193     3.93
LA1C+  2.05 0.238    24.99
SA1C   4.46 0.291    54.50
AO    92.05 0.377  1124.02
       TOTAL AREA  1225.00

HbA1c    4.46%
     HbF  0.32 %
0%                  15%
```

### Example 18

**Single measurement**

```
TP  523

NAME     %     TIME   AREA
FP     0.00 0.000     0.00
A1A    0.53 0.121     5.83
A1B    0.98 0.144    10.72
F      0.36 0.196     4.00
LA1C+  2.12 0.238    23.12
SA1C   4.45 0.291    48.59
AO    91.92 0.376  1004.44
       TOTAL AREA  1098.71

HbA1c    4.45%
     HbF  0.36 %
0%                  15%
```

**20 times of measurement**

```
TP  553

NAME     %     TIME   AREA
FP     0.00 0.000     0.00
A1A    0.52 0.123     4.29
A1B    0.99 0.146     8.18
F      0.35 0.193     2.86
LA1C+  2.04 0.238    16.79
SA1C   4.47 0.287    36.81
AO    91.98 0.377   757.37
       TOTAL AREA   826.29

HbA1c    4.47%
     HbF  0.35 %
0%                  15%
```

Fig.8

# Fig. 9

## Example 25

### Single measurement

TP    608

| NAME | % | TIME | AREA |
|------|------|------|------|
| FP | 0.00 | 0.000 | 0.00 |
| A1A | 0.56 | 0.115 | 5.84 |
| A1B | 1.05 | 0.141 | 10.91 |
| F | 0.27 | 0.185 | 2.77 |
| LA1C+ | 1.53 | 0.228 | 15.95 |
| SA1C | 4.44 | 0.276 | 46.24 |
| AO | 92.42 | 0.376 | 962.07 |
| | | TOTAL AREA | 1043.79 |

HbA1c   4.44%
HbF  0.27 %
0%                              15%

### 20 times of measurement

TP    570

| NAME | % | TIME | AREA |
|------|------|------|------|
| FP | 0.00 | 0.000 | 0.00 |
| A1A | 0.82 | 0.115 | 7.46 |
| A1B | 1.03 | 0.145 | 12.39 |
| F | 0.36 | 0.192 | 4.37 |
| LA1C+ | 1.55 | 0.234 | 18.54 |
| SA1C | 4.52 | 0.285 | 54.23 |
| AO | 92.27 | 0.376 | 1106.31 |
| | | TOTAL AREA | 1203.30 |

HbA1c   4.52%
HbF  0.36 %
0%                              15%

## Example 26

### Single measurement

TP    600

| NAME | % | TIME | AREA |
|------|------|------|------|
| FP | 0.00 | 0.000 | 0.00 |
| A1A | 0.55 | 0.115 | 5.89 |
| A1B | 1.02 | 0.145 | 11.03 |
| F | 0.28 | 0.197 | 3.02 |
| LA1C+ | 1.54 | 0.237 | 16.63 |
| SA1C | 4.38 | 0.288 | 47.15 |
| AO | 92.51 | 0.376 | 996.54 |
| | | TOTAL AREA | 1080.27 |

HbA1c   4.38%
HbF  0.28 %
0%                              15%

### 20 times of measurement

TP    596

| NAME | % | TIME | AREA |
|------|------|------|------|
| FP | 0.00 | 0.000 | 0.00 |
| A1A | 0.60 | 0.115 | 6.76 |
| A1B | 1.04 | 0.146 | 11.63 |
| F | 0.28 | 0.193 | 3.15 |
| LA1C+ | 1.56 | 0.237 | 17.48 |
| SA1C | 4.43 | 0.289 | 49.67 |
| AO | 92.37 | 0.376 | 1035.91 |
| | | TOTAL AREA | 1124.62 |

HbA1c   4.43%
HbF  0.28 %
0%                              15%

## Example 27

### Single measurement

TP    574

| NAME | % | TIME | AREA |
|------|------|------|------|
| FP | 0.00 | 0.000 | 0.00 |
| A1A | 0.56 | 0.115 | 8.25 |
| A1B | 0.98 | 0.145 | 11.01 |
| F | 0.33 | 0.187 | 3.74 |
| LA1C+ | 1.53 | 0.233 | 17.15 |
| SA1C | 4.41 | 0.285 | 49.39 |
| AO | 92.52 | 0.377 | 1036.12 |
| | | TOTAL AREA | 1123.65 |

HbA1c   4.41%
HbF  0.33 %
0%                              15%

### 20 times of measurement

TP    566

| NAME | % | TIME | AREA |
|------|------|------|------|
| FP | 0.00 | 0.000 | 0.00 |
| A1A | 0.61 | 0.115 | 7.13 |
| A1B | 1.04 | 0.147 | 12.12 |
| F | 0.30 | 0.188 | 3.55 |
| LA1C+ | 1.56 | 0.233 | 18.09 |
| SA1C | 4.48 | 0.285 | 52.02 |
| AO | 92.31 | 0.377 | 1073.00 |
| | | TOTAL AREA | 1165.91 |

HbA1c   4.48%
HbF  0.30 %
0%                              15%

## Example 28

### Single measurement

TP    613

| NAME | % | TIME | AREA |
|------|------|------|------|
| FP | 0.00 | 0.000 | 0.00 |
| A1A | 0.55 | 0.115 | 6.60 |
| A1B | 0.94 | 0.144 | 11.34 |
| F | 0.25 | 0.194 | 2.98 |
| LA1C+ | 1.50 | 0.237 | 18.07 |
| SA1C | 4.27 | 0.289 | 51.57 |
| AO | 92.74 | 0.376 | 1119.48 |
| | | TOTAL AREA | 1210.03 |

HbA1c   4.27%
HbF  0.25 %
0%                              15%

### 20 times of measurement

TP    588

| NAME | % | TIME | AREA |
|------|------|------|------|
| FP | 0.00 | 0.000 | 0.00 |
| A1A | 0.62 | 0.115 | 7.76 |
| A1B | 1.07 | 0.145 | 13.49 |
| F | 0.26 | 0.193 | 3.26 |
| LA1C+ | 1.61 | 0.238 | 20.19 |
| SA1C | 4.45 | 0.290 | 55.90 |
| AO | 92.25 | 0.375 | 1158.03 |
| | | TOTAL AREA | 1258.62 |

HbA1c   4.45%
HbF  0.26 %
0%                              15%

## INTERNATIONAL SEARCH REPORT

| International application No. |
|---|
| **PCT/JP2024/009348** |

| | |
|---|---|
| **A.** | **CLASSIFICATION OF SUBJECT MATTER** |

*G01N 30/88*(2006.01)i; *G01N 30/06*(2006.01)i
FI:    G01N30/88 Q; G01N30/06 C; G01N30/06 Z

According to International Patent Classification (IPC) or to both national classification and IPC

| | |
|---|---|
| **B.** | **FIELDS SEARCHED** |

Minimum documentation searched (classification system followed by classification symbols)

G01N30/88; G01N30/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

Science Direct

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | JP 2020-046435 A (SEKISUI MEDICAL CO., LTD.) 26 March 2020 (2020-03-26) | 1-2, 5-8 |
| | claims 1, 5-6, paragraphs [0006]-[0010], [0016], [0026]-[0027], [0136], [0175]-[0179] | |
| Y | | 3-4 |
| A | JP 9-233999 A (EZAKI GLICO CO., LTD.) 09 September 1997 (1997-09-09) | 1-8 |
| | paragraph [0016] | |
| Y | WO 2022/015765 A2 (AL2 IMPACT, INC.) 20 January 2022 (2022-01-20) | 3-4 |
| | paragraphs [0036]-[0038] | |
| A | JP 2020-076788 A (SEKISUI MEDICAL CO., LTD.) 21 May 2020 (2020-05-21) | 1-8 |
| | entire text, all drawings | |
| A | JP 2022-092957 A (ARKRAY, INC.) 23 June 2022 (2022-06-23) | 1-8 |
| | entire text, all drawings | |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 May 2024** | **21 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/009348**

| Patent document cited in search report | | | Publication date (day/month/year) | Patent family member(s) | | | Publication date (day/month/year) |
|---|---|---|---|---|---|---|---|
| JP | 2020-046435 | A | 26 March 2020 | US claims 1, 5-6 | 2021/0278422 | A1 | |
| | | | | EP | 3851850 | A1 | |
| | | | | CN | 112334767 | A | |
| JP | 9-233999 | A | 09 September 1997 | (Family: none) | | | |
| WO | 2022/015765 | A2 | 20 January 2022 | JP | 2023-534236 | A | |
| | | | | US | 2023/0242968 | A1 | |
| | | | | KR | 10-2023-0037618 | A | |
| | | | | CN | 116194753 | A | |
| JP | 2020-076788 | A | 21 May 2020 | US entire text, all drawings | 2021/0278422 | A1 | |
| | | | | EP | 3851850 | A1 | |
| | | | | CN | 112334767 | A | |
| JP | 2022-092957 | A | 23 June 2022 | US entire text, all drawings | 2022/0187258 | A1 | |
| | | | | EP | 4011473 | A1 | |
| | | | | CN | 114624368 | A | |

Form PCT/ISA/210 (patent family annex) (July 2022)